# EUROPEAN PATENT SPECIFICATION

(11) **EP 3 227 394 B1**
(45) Date of publication and mention of the grant of the patent: **03.07.2019**
(21) Application number: 15831068.0
(22) Date of filing: 30.11.2015
(51) Int. Cl.: C09D 11/52

(54) **A FILM-FORMING COMPOSTION AND A METHOD FOR MANUFACTURNIG A PHOTOACTIVE FILM**
FILMBILDENDE ZUSAMMENSETZUNG UND VERFAHREN ZUR HERSTELLUNG EINES FOTOAKTIVEN FILMS
COMPOSITION FILMOGÈNE ET PROCÉDÉ DE FABRICATION D'UN FILM PHOTOACTIF

(30) Priority: 03.12.2014 EP 14461595
(43) Date of publication of application: 11.10.2017
(73) Proprietor: Saule Sp. z o.o., 02-676 Warszawa (PL)
(72) Inventor: MALINKIEWICZ, Olga, PL-05-805 Kanie (PL)
(74) Representative: Kancelaria Eupatent.pl Sp. z.o.o
(86) International application number: PCT/IB2015/059215
(87) International publication number: WO 2016/088019

(56) References cited:
- WO-A1-2013/171517
- WO-A1-2014/045021
- JP-A- 2014 078 392
- US-A1- 2014 332 078

## Description

The present invention relates to a film-forming composition and a method for manufacturing a photoactive film.

Photoactive films are utilized in manufacturing photovoltaic cells, i.e. semiconductor elements for converting solar radiation into electrical energy. The photoactive layer of photovoltaic cells serves as an absorber of sun light (photons), therefore, the photoactive film is usually applied onto an outer surface of the photovoltaic cell which depending on the needs could be additionally coated by an outer protective layer.

Photoactive inks are one of known types of photoactive films. One of the advantages of the photoactive inks is that they can be easily and cheaplydeposited onto a substrate - the ink is printed over the substrate, whilst the choice of the printing technique depends on the kind of the substrate as well as physical properties of the ink, such as viscosity or adherability of the ink.

The known organic photoactive inks comprise organic film-forming substances in a form of doped polymers or monomers that are capable of polymerization after their deposition onto the predetermined substrate.

For example, a US patent application US20130087744 describes a composition of a photovoltaic ink consisting of a polymer precursors of the chemical formula M^{B}(ER)₃, wherein M^{B} is a metal selected from the group: In, Ga or Al; E is S or Se, and R is alkyl, aryl, heteroaryl, alkenyl, amido or silyl organic moiety. The organic substances such as aliphatic hydrocarbons, aromatic hydrocarbons, siloxanes, cyclosiloxanes, silicone fluids, acetonitrile, esters andethers are used as solvents. The ink is doped with compounds of the chemical formula: M*^{alk}*M^{B}(ER)₄ or M*^{alk}*(ER) where M^{alk} is Li, Na or K and R is alkyl or aryl. Other ingredients of the ink are: surfactants, dispersants, emulsifiers, anti-foaming agents, dryers, fillers, resin binders, thickeners, viscosity modifiers, anti-oxidant and adhesion promoters. Depending on the composition, the ink is a suspension or a solution that is formed by mixing all the ingredients. The ink serves as a photovoltaic layer and it is applied onto the substrate by printing. In order to solidify the applied film, the ink is dried by means of evaporation of the solvent.

Regardless of the good film-forming properties of the organic photoactive inks, the photovoltaic cells with applied ink film for absorbing photons feature relatively low efficiency of photon absorption in comparison with conventional silicon photovoltaic cells.

The aim of the present invention is to provide a photoactive film-forming composition absorbing the photons, ensuring better efficiency of the photovoltaic cells and showing good film-forming parameters.

A film-forming composition is presented. The composition comprises at least two components for forming perovskite, including:
- a first component having the formula: R_{y}M(a)_{z}X_{y+(z*a)}, wherein: R is at least one substituted or unsubstituted organic cation (C₁ - C₂₀) comprising from 1 to 20 carbon atoms, y lies in range from 0 to 1, M is at least one metal cation selected from the group consisting of Pb and Cs, (a) is valency of metal M, z lies in range from 0 to 1, X is halide anion, and
- a second component of the formula R_{y}MX_{y+2} wherein: R is at least one substituted or unsubstituted organic cation (C₁ - C₂₀) comprising from 1 to 20 carbon atoms, y lies in range from 0 to 1, M is at least one divalent metal cation selected from the group consisting of: Sn, Pb, Cs, Ca, Sr, Cd, Cu, Ni, Mn, Fe, Co, Pd, Ge, Sn, Yb and Eu, X is halide anion.

Preferably, the composition comprises more than one component of the formula: R_{y}M(a)_{z}X_{y+(z*a)}.

Preferably, the composition comprises more than one component of the formula R_{y}MX_{y+2}.

Preferably, the metal cation M of component of the formula R_{y}MX_{y+2} is the cation of metal selected from the group consisting of Sn and Pb.

Preferably, the organic cation R of component of the formula: R_{y}M(a)_{z}X_{y+z*a} is the cation selected from the group consisting of: CH₃CH₂NH₃⁺, (CH₃)₂NH₂⁺: HC(NH₂)₂⁺, wherein the organic cation of the component of the formula R_{y}MX_{y+2} is the cation of the formula: HC(NH₂)₂⁺.

Preferably, halide anion of the component of the formula: R_{y}M(a)_{z}X_{y+(z*a)} and of the component of the formula R_{y}MX_{y+2} is the anion selected from the group consisting of: F⁻, Cl⁻, Br⁻ and I⁻.

The composition has the form of an ink.

The composition comprises at least one organic solvent selected from the group consisting of dimethylformamide (DMF) and isopropanol (IPA).

The composition comprises thickeners selected from the group consisting of: glycerol and d-sorbitol and anti-crystallizing agents selected from the group consisting of dimethyl sulfoxide (DMSO).

Preferably, the volume ratio of DMF:glycerol equals to 3:2.

Preferably, the components of the general formula R_{y}M(a)_{z}X_{y+(z*a)} and the components of the general formula R_{y}MX_{y+2} are mixed.

Preferably, the components of the general formula of R_{y}M(a)_{z}X_{y+(z*a)} and the components of the general formula of R_{y}MX_{y+2}, are separated.

A method for forming the photoactive layer is also presented. The method comprises the step of mixing of
- a first component of the formula: R_{y}M(a)_{z}X_{y+(z*a)}, wherein: R is at least one substituted or unsubstituted organic cation (C₁ - C₂₀) comprising from 1 to 20 carbon atoms, y lies in range from 0 to 1, M is at least one metal cation selected from the group consisting of Pb and Cs, (a) is valency of metal M, z lies in range from 0 to 1, X is halide anion, with
- a second component of the formula R_{y}MX_{y+2} wherein: R is at least one substituted or unsubstituted organic cation (C₁ - C₂₀) comprising from 1 to 20 carbo atoms, y lies in range from 0 to 1, M is at least one divalent metal cation selected from the group consisting of: Sn, Pb, Cs, Ca, Sr, Cd, Cu, Ni, Mn, Fe, Co, Pd, Ge, Sn, Yb and Eu, X is halide anion.

The present invention is presented by means of example embodiments in a drawing, wherein:
Fig. 1 presents examples of reactions of curing of the photoactive composition;
Fig. 2 presents a graph of the dependence of the size of energetic gap and stoichiometric composition of I and Br (MA represents the moiety of CH₃NH₃⁺).
Fig. 3 presents schematically a double-stage method for obtaining a photoactive film from the composition comprising two separated liquid components.
Fig. 4 presents schematically a double-stage method for obtaining a photoactive film from the composition comprising two separated liquid components.
Fig. 5 presents schematically a double-stage method for obtaining a photoactive film from the composition comprising two separated components, wherein one component is a liquid component, and the other component is a powder component.
Fig. 6 presents schematically a double-stage method for obtaining photoactive film from the composition comprising two separated components, wherein both components are in a powder form.
Fig. 7 presents schematically an example of a bitmap used for printing.
Fig. 8 presents schematically a film from the ink comprising the film-forming composition.
Fig. 9 presents schematically an ink deposited onto a glass substrate, and substrates made of TIO and TPD.
Fig. 10 presents schematically a film of ink that has been just printed.
Fig. 11 presents schematically an ink deposited onto a substrate which is covered with a layer of polyTPD.
Fig. 12 presents schematically an ink deposited onto a substrate which is covered with a layer of polyTPD modified with plasma.
Fig. 13 presents schematically an ink deposited onto a glass substrate.
Fig. 14 presents schematically an ink after drying, i.e. curing of the coating.

Organometallic halide perovskites constitute an interesting class of materials having good semiconducting properties. Laboratory efficiency of solar cells comprising perovskiteshas become comparable with the efficiency of the solar cells based on leading photovoltaic technologies. Their attractive feature is good solubility in many commercially available solvents, which allows production of perovskites based on typical printing methods.

Below is presented a film-forming composition capable of forming an absorbing layer of photovoltaic devices. The composition is compatible with many types of substrates, for example quartz substrates, glass substrates, foils made of PET (polyethylene terephthalate), and even cellulosic substrates such as paper, foils made of chlorovinyl or cellulose, as well as the biodegradable materials - used as printing substrates.

Utilization of delicate substrates is possible because of low temperature of printing and finishing. The composition presented herein is suitable also for being deposited onto substrates coated with substances such as: polymeric layer (such as polyTPD (poly tributylphosphine), spiroOmeTAd), a layer of low molecular weight substance, for example including: TPD or Al(C₉H₆NO)₃. Moreover, the film-forming composition may be deposited onto substrates such as: PEDOT:PSS (poly(3,4-ethylenedioxythiophene)-poly(styrenesulfonate)) or inorganic substrates such as substrates made of ZnO, TiO₂ or made of oxides from group IV and XII of periodic table, the crystalline substrates of type: Si, CIGS, CdTe as well as hybrid substrates (e.g. different perovskites), nonetheless, it is not important how many layers the substrate comprises of, but only the last outer layer of the substrate is important.

The composition may be in the form of a powder, an ink or a solution, depending on particular needs, for example depending on the selected technique of deposition of the film-forming composition onto the substrate.

Deposition of the film-forming composition may be carried out by using various conventionally utilised deposition techniques, for example, the composition may be deposited onto the substrate by digital printing, offset printing or flexographic printing, in particular: ink-jet printing, electrographic printing, thermographic printing. Moreover, the composition may be deposited onto the substrate by using spray techniques or wet techniques, such as: spin-coating, blade-coating, meniscus coating as well as by using vapor deposition techniques such as vapor assisted techniques.

The film-forming composition comprises at least one component for synthesis of the perovskite material, and preferably at least two components for synthesis of the perovskite material, wherein one component is a film-forming component of the chemical formula: R_{y}MX_{y+2} wherein M is a divalent metal cation selected from the group consisting of: Sn, Pb, Cs, Ca, Sr, Cd, Cu, Ni, Mn, Fe, Co, Pd, Ge, Sn, Yb and Eu, and more preferably M is a divalent metal cation selected from the group consisting of Sn and Pb; X is a halide anion, i.e. for example: F⁻, Cl⁻, Br⁻, I⁻, and _{y+2} is a number of halide atoms, R is an organic cation (C₁ - C₂₀) substituted or unsubstituted comprising from 1 to 20 carbon atoms in the molecule and optionally comprising hydrogen, nitrogen and/or oxygen, for example the cation R is a compound of the following chemical formula: HC(NH₂)₂⁺, wherein y is preferably 0 or 1.

The film-forming components of the general formula: R_{y}MX_{y+2} constitute ionic compounds comprising an inorganic divalent metal M cation, or comprising a metal cation and an organic cation (M, R) and a halide anion (X). Preferably, as film-forming components of the general formula: R_{y}MX_{y+2}, the compounds of the following formulas are used: PbI₂, PbBr₂, PbCl₂, SnI₂, SnCl₂, SnBr₂, HC(NH₂)₂PbBr₃.

Moreover, the film-forming composition preferably comprises at least one component of the general formula: R_{y}M(a)_{z}X_{y+(z*a)}, where R is: an organic cation (C₁ - C₂₀) substituted or unsubstituted comprising from 1 to 20 carbon atoms in the molecule and optionally comprising hydrogen, nitrogen and/or oxygen. The organic cation (C₁ - C₂₀) R may be selected from the group of primary, secondary and tertiary amines, for example: methylamine cation CH₃NH₃⁺, ethylamine cation CH₃CH₂NH₃⁺, dimethylamine cation (CH₃)₂NH₂⁺, or the organic cation may be selected from the group of organic cations of the general formula: R₁R₂N-CH=NH₂⁺, where R₁, R₂ is hydrogen or aliphatic hydrocarbon (C₁ - C₂₀), for example the organic cation R may by the compound of the general formula: (H₂N-CH=NH₂)⁺, and y may equal from 0 to 1; X is a halide anion, for example: F⁻, Cl⁻, Br⁻, I⁻, and M is a metal cation selected from the group: Pb, Cs, and a is valence of metal (M), and z lies in range from 0 to 1.

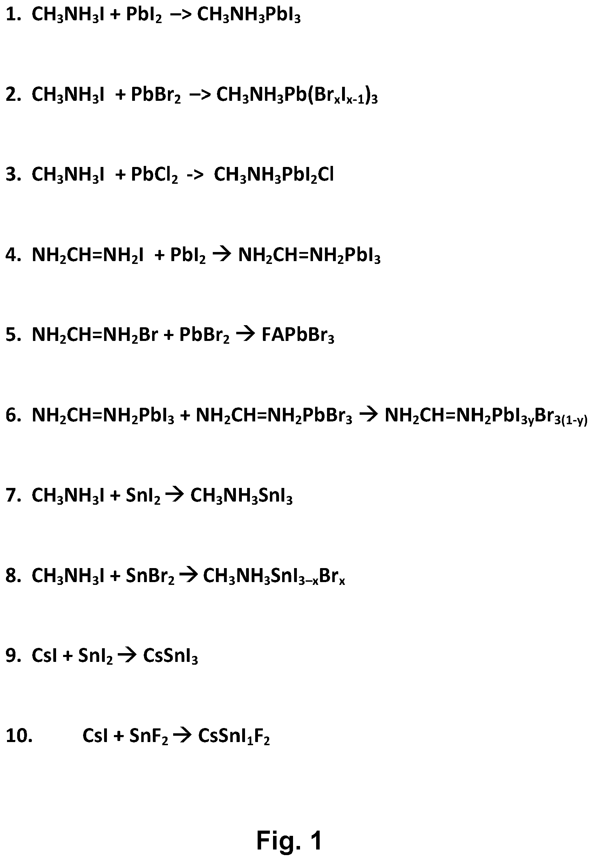

The film-forming components of the general formula: R_{y}M(a)_{z}X_{y+(z*a)}, are therefore, ionic compounds comprising organic cation, or comprising organic cation and inorganic cation (R, M), or optionally, comprising metal cation (Fig. 1 reaction no 9, 10) and halide anion. Preferably, as the film-forming components of the general formula: R_{y}M(a)_{z}X_{y+(z*a)}, the following compounds are used: CH₃NH₃I, HC(NH₂)₂PbI₃, HC(NH₂)₂Br, HC(NH₂)₂PbBr₃, CsI.

The film-forming composition may comprise additional ingredients such as solvents. The usable solvents are substances capable of dissolving of components of the film forming-composition and of dispersing of metals; the solvents prevent the components of the film-forming composition from aggregation. For instance, the following substances may be used as solvents: dimethylformamide (DMF), isopropanol (IPA), or mixtures thereof.

Moreover, the film-forming composition may comprise thickeners, such as: glycerol, polyglycerols, polyglycerol derivatives, and polyglycerol esters such as glycerol monooleate, polyglycerol-3 monooleate, d-sorbitol, sorbitol esters, polysorbates, glycerol monostearate, polyglycerol polyricinoleate. The film-forming composition may additionally comprise anti-drying agents such as bis-glyceryl polyacyladipate in water or oil based inks.

The film-forming composition may additionally comprise anti-crystallizing agents that prevent crystallization of the composition at the outlet of the printing nozzle during deposition of the film, such as dimethyl sulfoxide (DMSO).

Therefore, the film-forming composition may preferably comprise at least one component of the general formula: R_{y}M(a)_{z}X_{y+(z*a)} and at least one component of the general formula: R_{y}MX_{y+2}, which are selected so that the components can react, due to the mixing of the components with optional increasing of temperature, to obtain perovskite as the reaction product. Nonetheless, in case of mixing two different components of the general formula: R_{y}M(a)_{z}X_{y+(z*a)} (for example: CH₃NH₃I and CH₃NH₃Br), with a component of the general formula R_{y}MX_{y+2} (for example: PbI₂) or with two different components of the general formula: R_{y}MX_{y+2} (for example PbI₂, PbBr₂), due to the curing of the ink, the mixed perovskite is obtained. Moreover, the film-forming composition may comprise, for example, only one component of the general formula R_{y}M(a)_{z}X_{y+(z*a)}, and two or more components of the formula: R_{y}MX_{y+2}.

In case of mixing at least two components selected from the group of compounds of the general formula: R_{y}M(a)_{z}X_{y+(z*a)} or of the general formula: R_{y}MX_{y+2}, due to the curing of the ink, the film comprising mixed perovskite may be obtained.

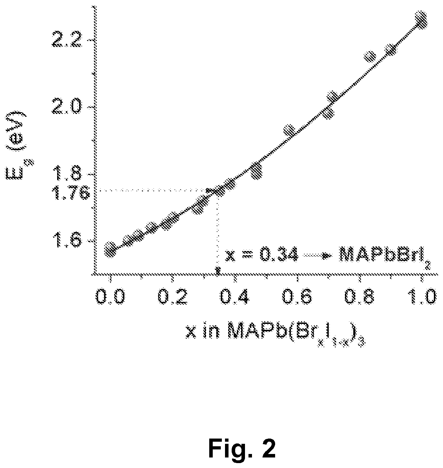

Fig. 1 shows the processes undergoing during the curing of the film made of film-forming ink composition and the examples of embodiments of components selected from the group of R_{y}M(a)_{z}X_{y+(z*a)} and R_{y}MX_{y+2} constituting the reaction substrates, wherein the reaction products are perovskites being the result of the reaction between components of the film-forming ink composition. Depending on the type of halide anion which constitutes a moiety of one film-forming component of the general formula: R_{y}M(a)_{z}X_{y+(z*a)} and depending on the halide anion constituting a moiety of second film-forming component of the general formula: R_{y}MX_{y+2}, due to the ink curing (i.e. due to the reaction between the components), mixed-anion perovskites are obtained such as in reaction no 2, 3, 6, 8, 10 or non-mixed-anion perovskites are obtained, as shown in Fig. 1 for the remaining reactions. The type of chosen halide anion affects the size of energy gap created in the perovskite layer, as shown in Fig. 2. For example, exchanging of I (iodine) into Br in the perovskite provides modulation of the size of energy gap.

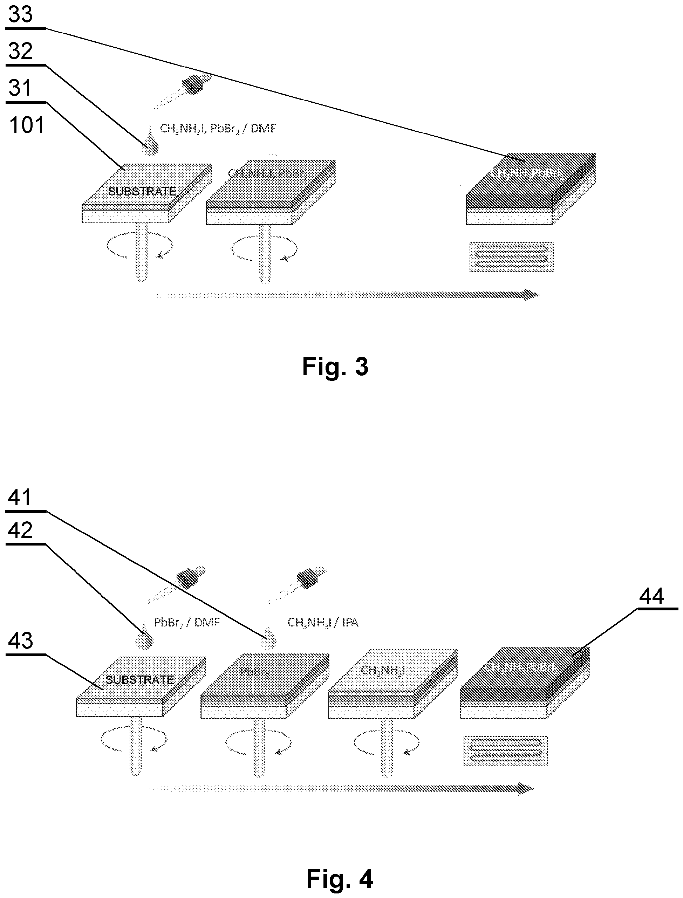

Fig. 3 schematically shows a double-stage method for depositing the film-forming composition onto the substrate. The composition may be deposited onto the substrate 31 by using any known technique, which depends on its properties relating to the type and the number of introduced auxiliary substances, such as solvents, or additives. For instance, the composition may be deposited onto the substrate 31 in a form of an ink comprising at least one component selected from the group of R_{y}M(a)_{z}X_{y+(z*a)} and at least one component selected form the group of R_{y}MX_{y+2} and the solvent 32 to be deposited by using a spin-coating technique. The process of curing of the film consists of reaction of the component of the formula R_{y}M(a)_{z}X_{y+(z*a)}, which can be for example the organic component: CH₃NH₃I, with the second component of the formula R_{y}MX_{y+2}, which can be for example an inorganic component: PbBr₂. The reaction results in obtaining the reaction product, i.e. the film 33, of the perovskite structure: (CH₃NH₃PbBrI₂). This process involves: heating the ink 12 within the temperature range from 100 to 150 °C for the time allowing the components to react. Preferably, the time of reaction may be from 10 to 20 min, and more preferably, the time of reaction may be 15 min.

The solidified film 33 comprises the perovskite structure of the chemical composition that depends on the used components, i.e. on the organic component and on the inorganic component.

The content of each component in the film-forming composition is to be selected stoichiometrically - according to the stoichiometry of respective reaction of curing of the film (the examples of curing reactions are shown in Fig. 1), so as to provide complete conversion of the components deposited onto the substrate. The amount of other components of the film-forming composition is selected depending on needs, for example depending on the predetermined density or viscosity of the film forming composition. The film forming composition in a form of an ink may comprise a solvent in amount from 0,01%w/w to 99.99%w/w.

Moreover, the components of the film-forming composition may be physically separated, and for example they may be stored as separated mixtures, wherein each component may be dissolved in solvent, nonetheless the first component and the second component may be dissolved in the same solvent or in different solvents.

Fig. 4 shows a multi-stage method for depositing the film-forming composition. Before the curing process, the components of the film-forming composition 41, 42 are physically separated, and the components 41, 42 are mixed during deposition onto the substrate 43. The multi-stage method for depositing the composition onto the substrate may be carried out by using one or more of the known coating techniques. Fig. 4 shows an example of a method for depositing the composition by using the spin-coating technique. The method involves: deposition of the first film-forming component 41, for example in a form of a solution of PbBr₂ in DMF, and deposition of the second film-forming component 42, for example in a form of a solution of CH₃NH₃I in IPA, wherein, depending in the needs, the component of the general formula: R_{y}M(a)_{z}X_{y+z*a}, may be deposited prior to deposition of the inorganic component of the general formula R_{y}MX_{y+2}, or the inorganic component may be deposited prior to the deposition of the component of the general formula: R_{y}M(a)_{z}X_{y+z*a}. Due to the reaction between the components, i.e. curing of the film on the substrate, the perovskite structure 44 of the formula: CH₃NH₃PbBrI₂ is obtained. Depending on the selected film-forming components, the curing process is to be carried out at a room temperature, or the process is to be carried out by heating of the film-forming components deposited onto the substrate, as shown in Fig. 4.

Alternatively, at the first step, one layer of the first component may be printed over the substrate, and the layer of the second substrate may be printed over the layer of the first component followed by heating the two layers.

Moreover, the components of the film-forming composition may have different forms. For example, the first component (R_{y}M(a)_{z}X_{y+z*a}) or the second component (R_{y}MX_{y+2}) may have a powder form (option without solvent), wherein the second component may be in a form of a solution. In such a case, the component in the powder form can react with the component in the form of the solution by vapor deposition of the evaporated powder (powder evaporation).

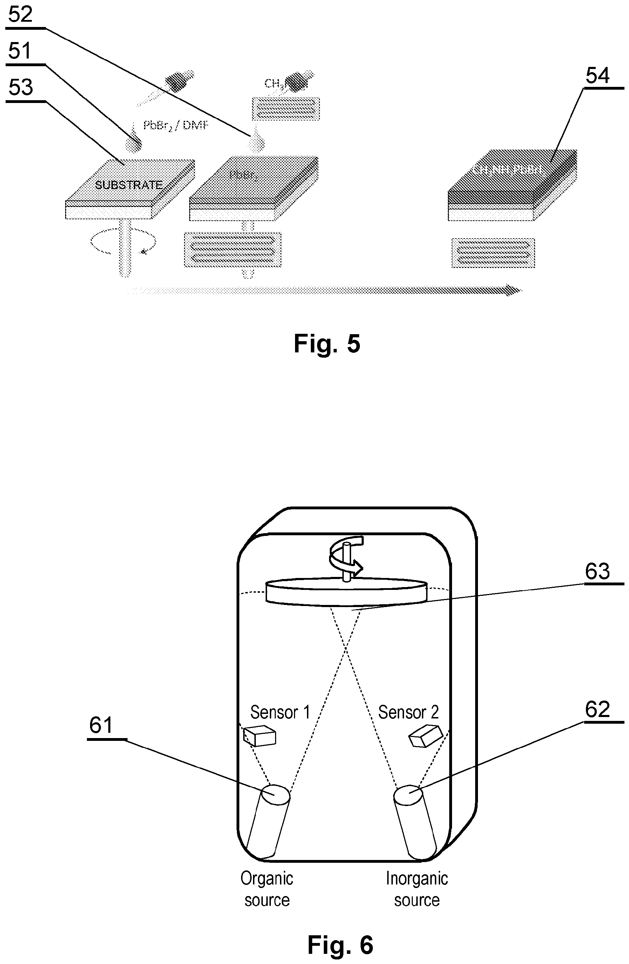

Fig. 5 shows schematically a double-stage method for depositing the film-forming composition onto the substrate 53 by using various coating techniques. The method involves a first stage wherein the first inorganic component in a form of solution 51 is deposited onto the substrate by spin-coating (for example the first component may be the solution of PbBr₂ in DMF). The method further involves a second stage wherein the second film-forming component is deposited by vapor deposition, e.g. by evaporation of the powder of second component, for example: CH₃NH₃I, near the inorganic component. The curing reaction, i.e. the reaction of formation of the perovskite 54 from the first component and the second component, may be carried out at an elevated temperature, approximately 100°C, within the time suitable for conversion of the components.

Moreover, both components of the film-forming composition may be stored in the powder form. In such a case, the curing of the film may be carried out by powder evaporation - the reaction of formation of the perovskite is carried out in the gaseous phase.

Fig. 6 presents schematically a method for depositing the components of the film-forming substance by deposition from gaseous phase that is to be formed by evaporation of the powder components by using a dual source evaporation technique. The process is carried out in high vacuum, wherein the first component (for example: CH₃NH₃I) 61 and the second component (for example PbBr₂) are evaporated in separated vessels, such as separated crucibles, wherein preferably each has an individual temperature sensor. Preferably, PbBr₂ is evaporated at the temperature of about 250°C, wherein CH₃NH₃I is preferably evaporated at the temperature of 70°C. The curing reaction is carried out in the gaseous phase, and the formed film of perovskite 63 deposits onto the substrate.

Optionally, the composition may be deposited onto the substrate and may be cured by using ablation technique, which may involve simultaneous evaporation of the film-forming components, such as: PbBr₂ and CH₃NH₃I. In order to evaporate the powder components, the components are put onto a thin metal plate, preferably made of tantalum. The powder evaporates due to the flow of current through the metal plate, reaction of the film-forming components in the gaseous phase and the deposition of cured perovskite film on the substrate.

Moreover, the composition may be applied onto the substrate by using known wet techniques such as: printing, spraying, blade-coating, meniscus-coating, slot die coating, dip coating or spin-coating.

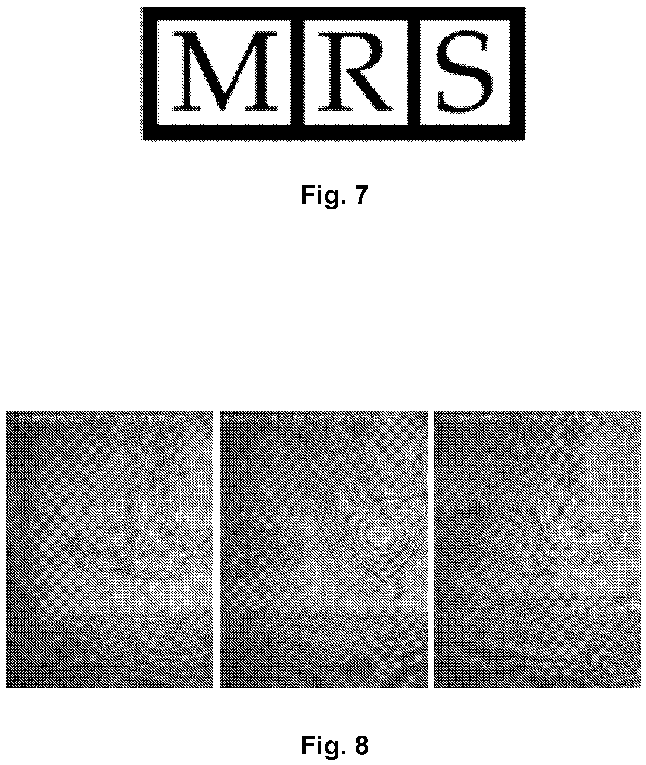

Figs. 7 - 13 present the compositions printed on various substrates such as: PEDOT:PSS, glass/ITO/PEDOT:PSS/TPD and glass substrate. The composition is applied in a form of an ink comprising film-forming components, a solvent - DMF and glycerol, wherein the volume ratio - DMF:glycerol equals 3:2. The conducted studies showed that the composition of the photoactive ink comprising 3 volumes of DMF for each 2 volumes of glycerol shows notably good parameters. It has been found that the volume ratio of DMF:glycerol amounting to 3:2 provides regulation of dynamic viscosity and the surface tension of the ink's drop.

Fig. 7 shows the printing bitmap, used in ink printing. Fig. 8 shows the fragments of a printed letter "M" that is a part of a logo: "MRS" that is printed over a glass/ITO/PEDOT:PSS/TPD substrate. Taking into account these figures, one may conclude that the wettability of PEDOT:PSS layers by the ink is proper, which means that the respective ink drops combine and do not unduly split over the substrate. The printing resolution is 300 x 300 dpi, which corresponds to the distance between the droplets of about 85 µm.

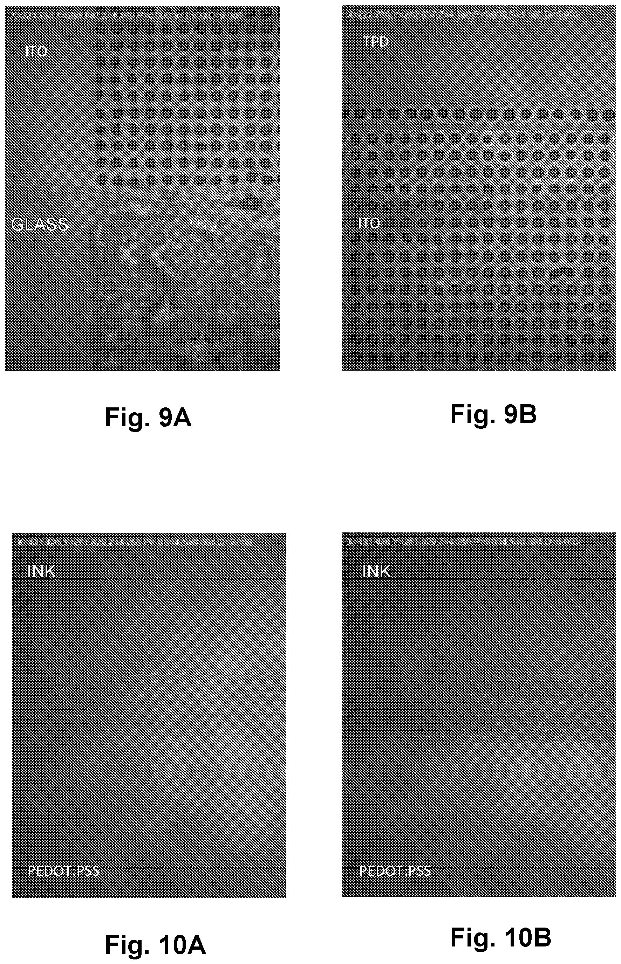

Fig. 9a presents the results of the measurements that show the difference between the wettability of the glass (bottom of Fig. 9a) and ITO (top of Fig. 9a). Fig. 9b presents the printing upon the connection of two layers: ITO and TPD (top and the bottom of Fig. 9b, respectively). In Fig. 9 one may observe that the wettability of the glass is much greater than wettability of both: TIO and TPD. The printing resolution is 300 x 300 dpi.

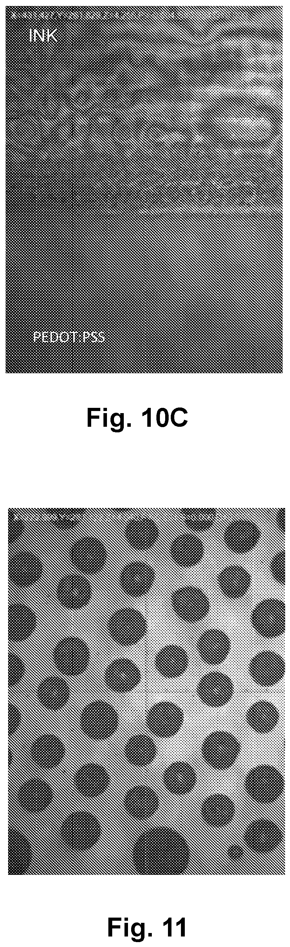

Fig. 10A shows a picture of a layer that has just been printed over the glass/ITO/PEDOT:PSS/polyTPD substrate (top half of Fig. 10A), whilst Fig. 10B shows the picture obtained by printing the ink layer two times, and Fig. 10C shows the picture obtained by printing the ink layer three times. Between printing of respective layers the samples were annealed at the temperature of 90 °C for 0,5 h. In case of good wettability (as in this case), the layers printed afterwards, in practice, do not change the layer.

Fig. 11 shows a photo of a substrate: glass/ITO/PEDOT:PSS/polyTPD, wherein the substrate is coated with the outer layer of polyTPD. Significant combining of the drops can be observed, which proves the weak wettability of the substrate by the ink. The printing resolution is 300 x 300 dpi.

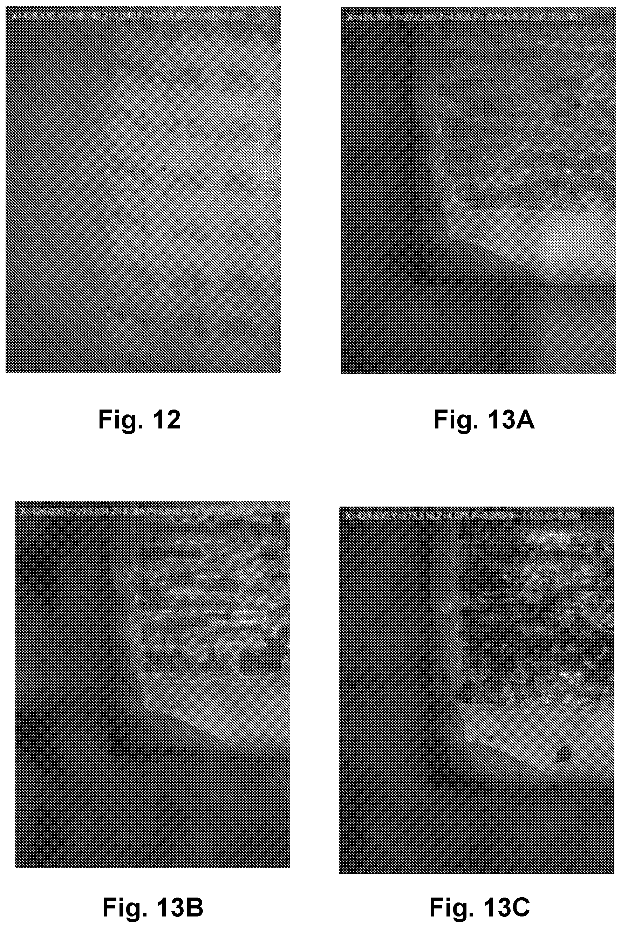

Fig. 12 shows a photo of a sample coated with polyTPD modified with plasma. Significant splitting of the drops can be observed, that combine even when printing at the resolution of 100 x 100 dpi.

Figs. 13A - 13C show samples with ink printings over the glass substrates at a resolution of 300 x 300 dpi for each printout. The samples are prepared for X-RD analysis (Fig. 13A shows the sample with one layer of ink printing, Fig. 13B shows the sample with two layers of ink printing, and Fig. 13C shows the sample with ten layers of ink printing). Between the printing of respective layers, the samples were dried for 0,5 h at the temperature of 90°C.

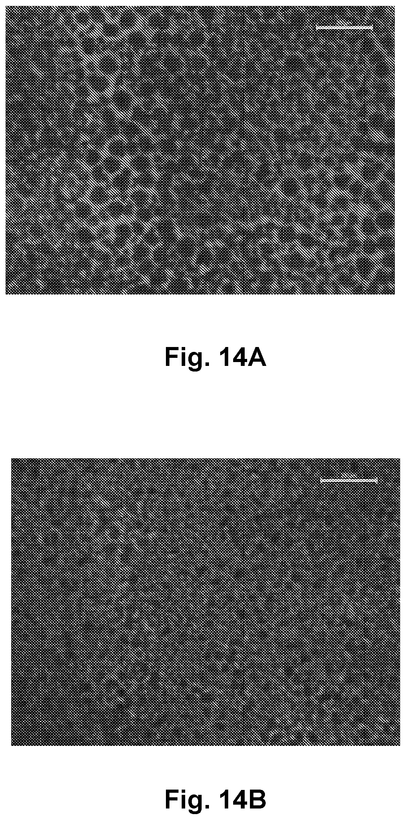

Figs. 14A - 14B show photos taken under an optical microscope, where the granules that have been formed during drying of the layer can be observed.

The formed photoactive film being the product of curing of the film-forming composition features high photons absorption, whilst the photovoltaic cells with the perovskite film, made of the composition presented herein, show high efficiency.

## Claims

1. A film-forming composition **characterized in that** it comprises at least two components for forming perovskite, including:
- a first component of the formula: R_{y}M(a)_{z}X_{y+(z*a)}, wherein: R is at least one substituted or unsubstituted organic cation (C₁ - C₂₀) comprising from 1 to 20 carbon atoms, y lies in range from 0 to 1, M is at least one metal cation selected from the group consisting of Pb and Cs, (a) is a valency of metal M, z lies in range from 0 to 1, X is a halide anion, and
- a second component of the formula R_{y}MX_{y+2} wherein: R is at least one substituted or unsubstituted organic cation (C₁ - C₂₀) comprising from 1 to 20 carbon atoms, y lies in range from 0 to 1, M is at least one divalent metal cation selected from the group consisting of: Sn, Pb, Cs, Ca, Sr, Cd, Cu, Ni, Mn, Fe, Co, Pd, Ge, Sn, Yb and Eu, X is a halide anion
**characterized in that** the composition has the form of an ink which further comprises:
- at least one organic solvent selected from the group consisting of dimethylformamide (DMF) and isopropanol (IPA),
- thickeners selected from the group consisting of: glycerol and d-sorbitol, and
- dimethyl sulfoxide (DMSO) as anti-crystallizing agent.

2. The composition according to claim 1, comprising more than one component of the formula: R_{y}M(a)_{z}X_{y+(z*a)}.

3. The composition according to claims 1 or 2, comprising more than one component of the formula R_{y}MX_{y+2}.

4. The composition according to any of preceding claims, wherein the metal cation M of the component of the formula R_{y}MX_{y+2} is a cation of metal selected from the group consisting of Sn and Pb.

5. The composition according to any of preceding claims, wherein the organic cation R of the component of the formula: R_{y}M(a)_{z}X_{y+z*a} is a cation selected from the group consisting of:, CH₃CH₂NH₃⁺, (CH₃)₂NH₂⁺: HC(NH₂)₂⁺, wherein the organic cation of the component of the formula R_{y}MX_{y+2} is the cation of the formula: HC(NH₂)₂⁺.

6. The composition according to any of preceding claims, wherein the halide anion of the component of the formula: R_{y}M(a)_{z}X_{y+(z*a)} and of the component of the formula R_{y}MX_{y+2} is an anion selected from the group consisting of: F⁻, Cl⁻ and Br⁻.

7. The composition according to any of preceding claims , wherein the volume ratio of DMF:glycerol equals to 3:2.

## Patentansprüche

1. Filmbildende Zusammensetzung, **dadurch gekennzeichnet, dass** sie zumindest zwei Komponenten zum Bilden von Perowskit umfasst, beinhaltend:
- eine erste Komponente der Formel: R_{y}M(a)_{z}X_{y+(z*a)}, wobei: R zumindest ein substituiertes oder nicht substituiertes organisches Kation (C₁ - C₂₀) ist, das 1 bis 20 Kohlenstoffatome umfasst, y im Bereich von 0 bis 1 liegt, M zumindest ein Metallkation ist, das aus der Gruppe ausgewählt ist, die aus Pb und Cs besteht, (a) eine Valenz des Metalls M ist, z im Bereich von 0 bis 1 liegt, X ein Halidanion ist, und
- eine zweite Komponente der Formel R_{y}MX_{y+2}, wobei: R zumindest ein substituiertes oder nicht substituiertes organisches Kation (C₁ - C₂₀) ist, das 1 bis 20 Kohlenstoffatome umfasst, y im Bereich von 0 bis 1 liegt, M zumindest ein divalentes Metallkation ist, das aus der Gruppe ausgewählt ist, die aus Folgendem besteht: Sn, Pb, Cs, Ca, Sr, Cd, Cu, Ni, Mn, Fe, Co, Pd, Ge, Sn, Yb und Eu, X ein Halidanion ist,
**dadurch gekennzeichnet, dass** die Zusammensetzung die Form einer Tinte aufweist, die ferner Folgendes umfasst:
- zumindest ein organisches Lösungsmittel, das aus der Gruppe ausgewählt ist, die aus Dimethylformamid (DMF) und Isopropanol (IPA) besteht,
- Verdickungsmittel, ausgewählt aus der Gruppe, die aus Folgendem besteht: Glycerol und d-Sorbitol, und
- Dimethylsulfoxid (DMSO) als Antikristallisierungsmittel.

2. Zusammensetzung nach Anspruch 1, umfassend mehr als eine Komponente der Formel: R_{y}M(a)_{z}X_{y+(z*a)}.

3. Zusammensetzung nach Anspruch 1 oder 2, umfassend mehr als eine Komponente der Formel R_{y}MX_{y+2}.

4. Zusammensetzung nach einem der vorhergehenden Ansprüche, wobei das Metallkation M der Komponente der Formel R_{y}MX_{y+2} ein Kation von Metall ist, das aus der Gruppe ausgewählt ist, die aus Sn und Pb besteht.

5. Zusammensetzung nach einem der vorhergehenden Ansprüche, wobei das organische Kation R der Komponente der Formel: R_{y}M(a)_{z}X_{y+z*a} ein Kation ist, das aus der Gruppe ausgewählt ist, die aus Folgendem besteht: CH₃CH₂NH₃⁺, (CH₃)₂NH₂⁺: HC(NH₂)₂⁺, wobei das organische Kation der Komponente der Formel R_{y}MX_{y+2} das Kation der folgenden Formel ist: HC(NH₂)₂⁺.

6. Zusammensetzung nach einem der vorhergehenden Ansprüche, wobei das Halidanion der Komponente der Formel: R_{y}M(a)_{z}X_{y+(z*a)} und der Komponente der Formel R_{y}MX_{y+2} ein Anion ist, das aus der Gruppe ausgewählt ist, die aus Folgendem besteht: F⁻, Cl⁻ und Br⁻.

7. Zusammensetzung nach einem der vorhergehenden Ansprüche, wobei das Volumenverhältnis von DMF:Glycerol 3:2 entspricht.

## Revendications

1. Composition de formation de film **caractérisée en ce qu'**elle comprend au moins deux composants destinés à former de la pérovskite, incluant :
- un premier composant de formule : R_{y}M(a)_{z}X_{y+(z*a)}, dans laquelle : R est au moins un cation organique substitué ou non substitué en (C₁ à C₂₀) comprenant 1 à 20 atomes de carbone, y repose dans une plage de 0 à 1, M est au moins un cation métallique sélectionné parmi le groupe constitué par le Pb et le Cs, (a) est une valence du métal M, z repose dans la plage de 0 à 1, X est un anion halogénure, et
- un deuxième composant de formule R_{y}MX_{y+2} dans laquelle : R est au moins un cation organique substitué ou non substitué en (C₁ à C₂₀) comprenant 1 à 20 atomes de carbone, y repose dans une plage de 0 à 1, M est au moins un cation métallique divalent sélectionné parmi le groupe constitué par : Sn, Pb, Cs, Ca, Sr, Cd, Cu, Ni, Mn, Fe, Co, Pd, Ge, Sn, Yb et Eu, X est un anion halogénure
**caractérisé en ce que** la composition a la forme d'une encre qui comprend en outre :
- au moins un solvant organique sélectionné parmi le groupe constitué par le diméthylformamide (DMF) et l'isopropanol (IPA),
- des épaississants sélectionnés parmi le groupe constitué par : le glycérol et le d-sorbitol, et
- le diméthylsulfoxyde (DMSO) comme agent anti-cristallisation.

2. Composition selon la revendication 1, comprenant plus d'un composant de formule : R_{y}M(a)_{z}X_{y+(z*a)}.

3. Composition selon la revendications 1 ou 2, comprenant plus d'un composant de formule R_{y}MX_{y+2}.

4. Composition selon l'une quelconque des revendications précédentes, dans laquelle le cation métallique M du composant de formule R_{y}MX_{y+2} est un cation de métal sélectionné parmi le groupe constitué par le Sn et le Pb.

5. Composition selon l'une quelconque des revendications précédentes, dans laquelle le cation organique R du composant du formule : R_{y}M(a)_{z}X_{y+z*a} est un cation sélectionné parmi le groupe constitué par : CH₃CH₂NH₃⁺, (CH₃)₂NH₂⁺, HC(NH₂)₂⁺, dans laquelle le cation organique du composant de formule R_{y}MX_{y+2} est le cation de formule : HC(NH₂)₂⁺.

6. Composition selon l'une quelconque des revendications précédentes, dans laquelle l'anion halogénure du composant de formule : R_{y}M(a)_{z}X_{y+(z*a)} et du composant de formule R_{y}MX_{y+2} est un anion sélectionné parmi le groupe constitué par : F⁻, Cl⁻ et Br⁻.

7. Composition selon l'une quelconque des revendications précédentes, dans laquelle le rapport en volume de DMF/glycérol est égal à 3/2.
